(19) Europäisches Patentamt / European Patent Office / Office européen des brevets

(11) **EP 2 852 169 B1**

(12) **EUROPEAN PATENT SPECIFICATION**

(45) Date of publication and mention
of the grant of the patent:
**08.11.2017  Bulletin 2017/45**

(51) Int Cl.:
*H04N 21/43* (2011.01)  *H04N 21/434* (2011.01)
*H04N 21/4367* (2011.01)  *H04N 21/4385* (2011.01)

(21) Application number: **14185401.8**

(22) Date of filing: **18.09.2014**

(54) **A multi-programme transport stream common interface controller**

Gemeinsame Schnittstellensteuerung für Mehrfachprogrammtransportstrom

Contrôleur d'interface commune de flux de transport multi-programme

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.09.2013  EP 13185049**

(43) Date of publication of application:
**25.03.2015  Bulletin 2015/13**

(73) Proprietor: **SmarDTV S.A.**
**1033 Cheseaux-sur-Lausanne (CH)**

(72) Inventor: **Deprez, Olivier**
**13600 La Ciotat (FR)**

(74) Representative: **Leman Consulting S.A.**
**Chemin de Précossy 31**
**1260 Nyon (CH)**

(56) References cited:
**WO-A1-02/41625**     **WO-A1-2010/070054**
**US-A1- 2007 074 256**

• **DVB ORGANIZATION: "TM-CI-Plus0082 MultiStream - PCR Timing Recovery Proposal.pptx", DVB, DIGITAL VIDEO BROADCASTING, C/O EBU - 17A ANCIENNE ROUTE - CH-1218 GRAND SACONNEX, GENEVA - SWITZERLAND, 29 August 2012 (2012-08-29), XP017839934,**

**Description**

**TECHNICAL DOMAIN**

The present invention generally relates to the domain of reception and processing of digital television signals. More particularly, the invention is directed towards the merging of a plurality of received transport streams to be sent via a Common Interface or a Cable-Card Interface to a conditional access module for descrambling of a plurality of different contents. Embodiments of the invention may be deployed in an interface controller.

**STATE OF THE ART**

In the domain of the transmission, reception and processing of conditional access protected digital media content, CI Plus is an industry-standard technical specification which adds additional security and features to a proven digital video broadcast (DVB) Common Interface Standard that allows CI Plus compatible consumer electronic devices, such as Integrated Digital Televisions and Set Top Boxes, to have access to a wide range of Pay TV Services via plug-in CI Plus Modules, such as conditional access modules (CAM), wherever the CI Plus Technology is supported by the local Pay-TV Provider. Another industry standard, usually used in OpenCable broadcasting, is the CableCard interface.

There has long been a need to receive and process a plurality of different media contents simultaneously, thereby allowing a consumer to view a first content while recording a second content for example, or to view a second content along with a first content, for example in a picture-in-picture configuration or in two or more predetermined portions of the screen or with one picture on top of another with different transparencies. Several solutions for allowing for the simultaneous viewing of multiple contents have been proposed in the state of the art, including a system described in European Patent Publication number 1,340,368 B1, which discloses a system in which a single conditional access module is capable of simultaneously decrypting a plurality of separately received television programme signals, where the signals have been multiplexed into a single combined transport stream. A transport stream is a standard format for transmission and storage of audio, video, and Program and System Information Protocol (PSIP) data, generally known in the domain of broadcasting systems such as DVB, ATSC and IPTV. The information within a transport stream is arranged in packets, a packet being the basic unit of a transport stream. A packet starts with a sync byte and a header. Additional optional transport fields, as signaled in an optional adaptation field, may follow. The rest of the packet consists of payload. Packets are 188 bytes in length or more.

The system described in the Patent Publication mentioned above differs from its predecessors in that it further includes a demultiplexer for providing a plurality of decrypted television programme signals. In the described system, the host device uniquely marks each of the received television programme signals before the multiplexing in order to facilitate efficient subsequent demultiplexing. The unique marking process involves modifying the sync bytes in the transport stream depending on the origin of the received signal. Employing such techniques, a proprietary system which has been disclosed by the Applicant of the present invention, and known as CIMaX®+, is essentially a controller for any of a Common Interface, a CI Plus Interface or a CableCard Interface (a proprietary standard interface mostly used in the United States), allowing for Integrated Digital TV and Set Top Box manufacturers to integrate up to two Conditional Access Modules (CAM) with improved transport stream (TS) routing. This system has limitations in that a maximum of only two concurrent transport streams can be handled simultaneously, whereas at least three inputs would be desirable. The system presents further limitations in the way process IDs (PID) are handled - only up to eight positive PID filters, whereas sixteen would be desirable. Furthermore, latency problems can lead to jitter and improper decoding.

United States Patent Application Publication number 2004/0,252,833 A1 also discloses a system similar to the one described above but an equivalent marking process described therein involves remapping process identifiers (PID) within the received transport streams depending on their origin rather than modifying the sync byte.

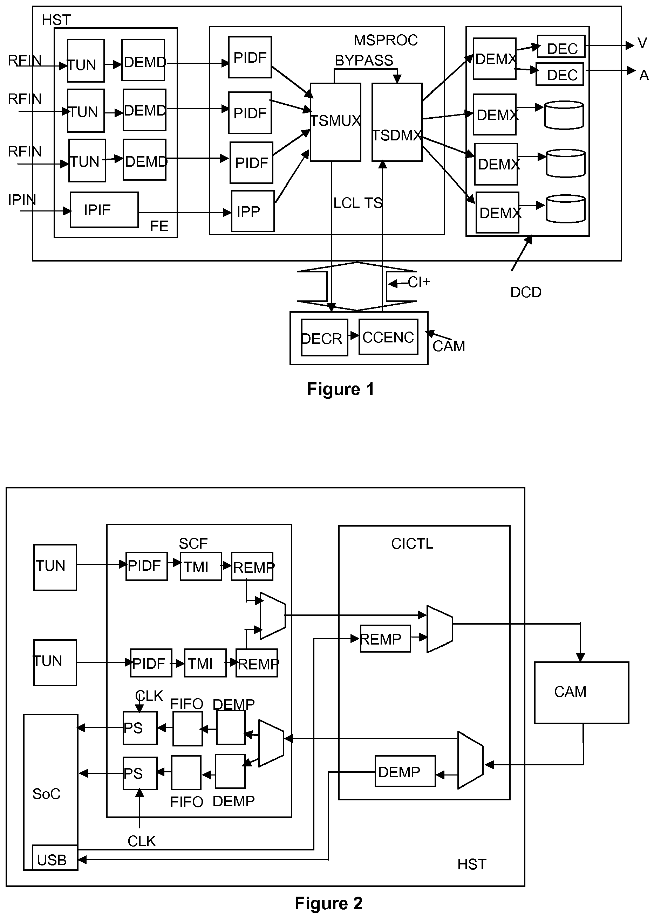

Recent developments in the CI Plus Standard has led to a version of the standard, known as CI Plus 1.4, which allows for processing of multi-stream transport streams, whereby, in the case of a DVB standard, the host device is allowed to request the CICAM (Common Interface CAM) to descramble more than one content potentially originating from a plurality of different transport streams (TS) or multi-program transport streams (MPTS). This effectively allows for embodiments of the multi-stream processing described in the previously recited prior art to be achieved within the scope of the CI Plus Standard. Figure 1 illustrates a system which could be envisaged by a skilled person who wishes to perform multi-stream processing using a host device connected to a conditional access module over an interface configured to operate according to the new CI Plus 1.4 standard.

CI Plus 1.4 specifies that the host has to allocate one sync byte value for each individual transport stream comprising a programme to be descrambled. Typically the first transport stream will be allocated a sync byte value of 0x47, the second 0x48 and so on. The different received transport streams are multiplexed and the multiplexed transport stream is sent over the transport stream interface to the CICAM. For the sake of efficiency, CI Plus 1.4 allows for the bandwidth required for each of the received transport streams to be reduced by agreeing on a list of PIDs that should be kept. The Host then performs appropriate PID filtering on the received streams (TS and/or MPTS), resulting in a number of partial transport streams (Partial TS). The Partial TSs are merged together as shown in Figure 1.

Depending on the way the skilled person chooses to perform the multiplexing and demultiplexing in the hypothetical system, the process of multiplexing and/or demultiplexing the partial transport streams may introduce packet latency. This is simply because two packets from two different partial transport streams may arrive at the transport stream multiplexer input at the same time, meaning that one of them will have to be delayed, thereby introducing some latency when the delayed packet contains Programme Clock Reference (PCR) information. This latency introduces jitter, leading to improper decoding, thereby causing possible freezing or skipping during playing of the content.

United States Patent Application Publication number 2007/074 256 A1 discloses an interface device to a Cable CARD module. In order to achieve packet synchronisation in the descrambled packets, the device comprises a local time stamp generating unit that generates a local time stamp and inserts such local time stamp in the transport stream packets before sending them to the Cable CARD module. The local time stamp is a value obtained from a free-running 32-bit counter clocked at 27 MHz. The 188-byte MPEG-2 TS packets are thereby extended by a 12-byte pre-header, the pre-header containing the locally-generated time stamp. After descrambling, the difference between the value of the inserted local time stamp and the current value of the 32-bit counter is added to the PCR value to correct for the PCR jitter.

In a presentation on the subject of DVB-TM-CI-Plus Multi Stream by David Hill-Jowett and Sri Gutta, entitled PCR Timing Recovery Proposal, made available to the DVB Organisation on 29th August 2012, an interface device to a CI+ 1.4 Conditional Access Module is disclosed. In this document, a solution for eliminating jitter during multi-stream processing is said to be to recover the PCR timing. This may be done using a Local Continuity Counter, for timing recovery, along with a Local Time Stamp, providing timing information. The Local Continuity Counter is incremented for every muxed packet and inserted into the packet header. Both values are stored in a look-up table. During demultiplexing of the descrambled packets, the Local Continuity Counter value is used to identify the correct LTS value stored in the look-up table.

## BRIEF SUMMARY OF THE INVENTION

In view of the prior art, there is a need to be able to perform multi-stream processing involving up to sixteen positive PID filters per transport stream for at least three received transport streams (two serial inputs and one USB input), where there is a guarantee of a constant delay through the system, thereby guaranteeing no jitter.

A proprietary system which has been disclosed by the Applicant of the present invention and known as CIMaX®+, is essentially a controller for any of a Common Interface, a CI Plus Interface or a CableCard Interface, allowing for Integrated Digital TV and Set Top Box manufacturers to integrate up to two Conditional Access Modules (CAM) with improved transport stream (TS) routing. Considering the new possibilities for multi-streaming processing made available to TV vendors as the new CI Plus 1.4 Standard is adopted, the CIMaX®+ system, although compliant with the CI Plus 1.4 Standard, presents a certain number of limitations as previously described. For this reason it is reasonable to assume that TV vendors (or video player vendors or the like) seeking to include multi-streaming functionality into their equipment and desirous to include all advantages afforded through the adoption of the new CI Plus 1.4 Standard, would be unlikely to resort to the present CIMaX®+ solution. It is a goal of the present invention to allow for the CIMaX®+ solution to be included in a system designed to provide an interface compatible with the CI Plus 1.4 Standard.

With the arrival of CI Plus 1.4, TVs, video player/recorders and other such systems configured to receive and play multi-stream conditional access content would be expected to be able to process at least three transport stream inputs (two serial inputs and one USB input), to have available sixteen positive PID filters per transport stream and to be able to guarantee a constant delay in the sense that time differences between certain received transport stream packets are maintained following processing of the content in the CICAM module (usually a CAM for receiving and decrypting the content). According to a first aspect of the present invention, a CIMaX®+ module configured to cooperate with a side-car Field-Programmable Gate Array (FPGA), or any equivalent custom module, is proposed in order to provide a multi-programme transport stream (common) interface controller, wherein the above described expectations for multi-stream processing can be met. The side-car FPGA is preferably placed between the DVB Tuners for receiving the transport streams (and/or multi-programme transport streams) and the CIMaX®+ module itself.

The side-car FPGA, according to an example, has the following general features:

> accepts two serial transport stream inputs;
> configured to filter up to sixteen PIDs on each of the serial transport stream inputs and produce a corresponding number of single programme transport streams (SPTS);
> inclusion of timing information into the resulting SPTS so that accurate timing can be restored;
> modification of the sync byte of each resulting SPTS;
> merging (or multiplexing) of the two resulting SPTS and sending of the 2xSPTS resulting TS to the Serial TS;

prepares input to the CIMaX®+;
unmerging (or demultiplexing) the 2xSPTS returned back by the CIMaX®+;
restores the original sync byte value of each SPTS; and
generates some time accurate SPTS towards the serial TS inputs of the SoC.

It is worth noting that the serial transport stream inputs mentioned above can carry either single programme transport streams (SPTS) or multiple-programme transport streams (MPTS). After PID filtering, the resulting transport stream is preferably a single programme transport stream (SPTS). According to at least one example, the transport stream after PID filtering is always a single programme transport stream (SPTS). The scope of the invention is as defined by the appended claims.

## BRIEF DESCRIPTION OF THE DRAWINGS

The present invention will be better understood thanks to the detailed description which follows and the accompanying drawings, which are given as non-limiting examples of embodiments of the invention, namely:

Figure 1, illustrating a possible multiple-programme transport stream processing application in which a CI Plus 1.4 interface would find advantageous use;
Figure 2, showing a system comprising a host device and a CAM, the host device being configured to comprise an embodiment of the present invention using a side-car FPGA and a CIMaX®+ module;
Figure 3, showing details of the side-car FPGA used in an embodiment of the present invention;
Figure 4, showing details of the side-car FPGA used in another embodiment of the present invention;
Figure 5, showing a timing diagram pertaining to part of a system in which an embodiment of the present invention is deployed;
Figure 6, showing another timing diagram pertaining to part of a system in which another embodiment of the present invention is deployed; and
Figure 7, showing another timing diagram pertaining to part of a system in which another embodiment of the present invention is deployed.

## DETAILED DESCRIPTION

The present invention allows for the realisation of a multi-programme transport stream interface controller, which can be used in a conditional access digital content application in which a standard interface such as a Common Interface is deployed. Other embodiments of the invention can be used in a conditional access content application in which a CableCard Interface is deployed. Embodiments of the present invention may be realised using a side-car Field-Programmable Gate Array (FPGA) or other equivalent module in cooperation with a CIMaX®+ module to compensate for the latencies resulting from state of the art solutions for multi-stream processing described above, thereby eliminating jitter and allowing for proper decoding without freeze or skipping problems during playback. Using a system in which an embodiment of the present invention is deployed, it is possible to process at least three transport stream inputs (two serial inputs and one USB input), to have available at least sixteen positive PID filters per transport stream and to be able to guarantee a constant delay of transport packets across the system.

A DVB Standard, CI+ (Common Interface Plus) is known for allowing communication of transport stream and commands between a host device and a conditional access module. A recent improvement on this Standard, known as CI+ 1.4, allows for multi-programme transport stream processing as illustrated in Figure 1. Figure 1 shows how a plurality of programs originating from different multi-programme transport streams may be processed using the CI+ 1.4 Standard. Generally, the plurality of received transport streams is each filtered so that only packets associated with a subset of PIDs of interest is retained, thereby giving a plurality of partial transport streams. This allows for more efficient use of bandwidth (Transport Stream Interface being limited to 96Mbits/s) by allowing for a selection of packets corresponding to a pre-determined list of PIDs of interest. The partial transport streams are multiplexed before being sent together (Local Transport Stream (LCL TS)) for processing by the conditional access module via the Common Interface. Once received back from the conditional access module, again via the Common Interface, the transport stream (Local Transport Stream) is demultiplexed into different streams in the decoder (DCD), where they can be either stored or played.

As known in the state of the art, a CIMaX®+ module can be used as a CI/CI Plus or CableCard Interface controller to provide flexible transport stream routing options between a host device and up to two conditional access modules (CAM). As shown in the right hand part of Figure 2, the CIMaX®+ module can be used to combine transport streams from two different sources (REMP) and to send the combined transport stream to a CAM. The CIMaX®+ can also be used to restore two transport streams from a single combined processed transport stream coming back from the CAM (DEMP). Figure 2 also shows how a side-car FPGA (SCF) can be combined with the CIMaX®+ module (CIMX) to provide even more flexibility.

Figure 2 shows a block diagram of a system for processing a multi-programme transport stream in which an embodiment of the present invention may be deployed. The system includes an interface (CI) between a conditional access module and a host device, the interface being configured to function according to the CI+ 1.4 Standard. The system comprises a CIMax®+ interface controller and an FPGA side-car module. Both the (known CIMaX®+) interface controller and the FPGA side-car module may be comprised within the host device according to some embodiments. The SoC block in Figure 2 may be any System-on-Chip module and indeed may be a playback and/or storage device for viewing and/or recording the video contents extracted from the input transport streams/multi-programme transport streams as long as it is configured to receive a plurality of transport streams, preferably each carrying different digital media contents. The SoC comprises two inputs for receiving transport streams and a USB bidirectional port through which another transport stream may pass. Figure 2 shows the SoC as being included within the host device, but according to other embodiments the SoC may be external to the host device. Similarly, the DVB Tuners (TUN) may be part of a receiver connected to the host device or may be part of the host device (HST) itself.

According to an aspect of the present invention, an embodiment thereof comprises the known interface controller (CIMaX®+) and the side-car FPGA (or other equivalent custom module) so linked as to provide a system for controlling the standard interface between the host device and the conditional access module. The system may be comprised within a host device comprising the standard interface for communicating with the conditional access module. The host device may further comprise two receiver modules to provide two transport streams to suitable inputs on the side-car FPGA module and a media player/recorder or any other SoC module for processing transport stream content as long as it has two transport stream inputs and a USB port through which a further transport stream may transit. The side-car FPGA module is configured at least to merge the two received transport streams into one transport stream to be sent to the CIMaX®+ module and to receive a merged transport stream, demerge to two transport streams and send each of the demerged transport streams to the SoC module. The CIMaX®+ module is configured to receive the merged transport stream from the side-car FPGA module and to further receive a transport stream from the USB port of the SoC module and to merge these together to be sent to the CAM. It is further configured to receive back from the CAM a processed transport stream and to demerge this into a transport stream to be sent to the USB port of the SoC module and a transport stream comprising a merge of two transport streams to the side-car FPGA module. The side-car FPGA module is further comprised to demerge the received transport stream merge into two transport streams to be sent to each of the transport stream inputs of the SoC module.

According to an embodiment, the host device may comprise a plurality of DVB Tuners (TUN) to receive transport streams comprising preferably different contents. Each or either of the transport streams may be a multiple program transport stream (MPTS). The side-car FPGA is configured to filter the required content to give a plurality of partial transport streams and to merge the partial transport streams. The host device may further comprise a content player or player/recorder (SoC) configured to process a plurality of transport streams. Alternatively, the content player/recorder may be external to and connected to the host device. The content player/recorder (SoC), being suitable for a multi-programme environment, therefore has at least two transport stream inputs (TSIn1, TSIn2). The content player/recorder further has a USB connection capable of receiving and sending further transport stream content. The host device still further comprises the CIMaX®+ module as shown. The CIMaX®+ module functions as originally intended in that it is configured to receive two concurrent transport streams carrying separately received television programme signal contents. According to the embodiment, a first stream is the merged partial transport streams mentioned above and a second stream is a transport stream received from the content player's (SoC's) USB port. The CIMaX®+ module, being configured to merge two received transport streams, combines the received merged partial transport streams and the transport stream received from the USB port to produce a transport stream comprising the three different contents. This combined transport stream is in a format which is suitable to be handled by a CI Plus 1.4 compatible module such as a CAM, shown in Figure 2 as being connected to the host device for receiving multiple contents and returning processed multiple contents. By CI Plus compatible, it means that the CAM is configured to be able to identify the three different contents (by the sync-bytes) and to process them accordingly. After processing by the CAM, the CIMaX®+ module receives the processed combined transport stream comprising the three processed contents, unmerges them into a single transport stream to be sent back to the USB port and a combined transport stream to be sent back to the side-car FPGA. The side-car FPGA de-merges this combined transport stream into two partial transport streams and performs the processing allowing for the correct scheduling of each partial transport stream before sending them to their respective inputs of the content player at the right time. This processing (for correct scheduling) will be described below.

According to a variation of this embodiment, the CIMaX®+ module is configured to perform PID filtering to select certain content. In a particular embodiment, this filtering is for content coming from the USB transport stream content, similar to the way the filtering is done in the side-car FPGA for content received from the DVB Tuners. According to one variant, this filtering (in the CIMaX®+ module) is done instead of the filtering in the side-car FPGA. According to another variant, this filtering is in addition to the one done in the side-car FPGA. In any case, this filtering gives an opportunity for the content from the USB in the SoC to be filtered since this content does not necessarily go through the side-car FPGA module.

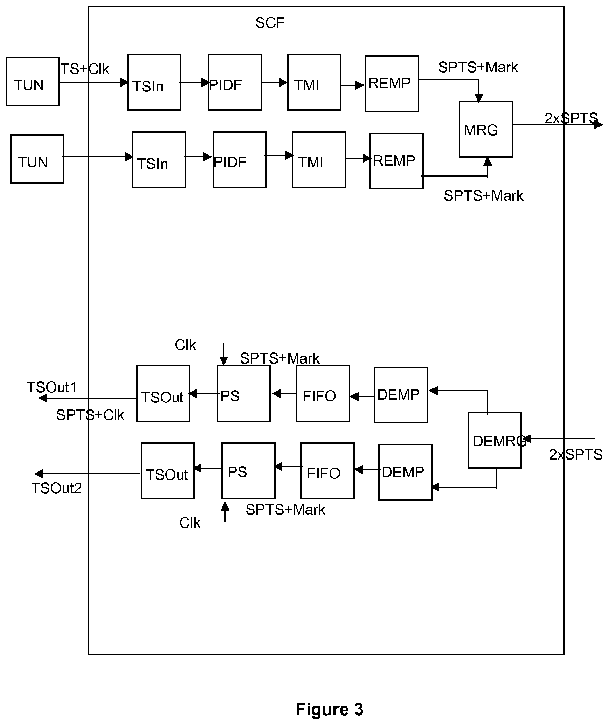

Figure 3 shows more detail of the side-car FPGA according to another aspect of the present invention. The blocks of interest for dealing with potential problems of latency, and indeed part of the characterising features of an embodiment of the present invention, are the Timing Mark Inserter (TMI) and the Packet Scheduler (PS). The side-car FPGA is configured to generate time-accurate partial transport streams for the transport stream inputs (TSIn1, TSIn2) of the content player (SoC). To accomplish this the side-car FPGA is configured to filter the transport streams at each multiple programme transport stream input to give partial transport streams (one for each input) and modify sync bytes of each of the partial transport streams according to timing information found within the partial transport streams. It is further configured to merge the resulting partial transport streams to be processed by the CIMaX®+ module and to unmerge the transport stream received back from the CIMaX®+ module. It is still further configured to restore the modified sync bytes back to their original values and to send the time-accurate unmerged transport streams to the content player (SoC).

The purpose of the Timing Mark Inserter (TMI) is to insert some information useful for the packet Scheduler (PS) to correctly schedule a transport packet within the transport stream such that the transport packet is delivered to the SoC at the right time.

By using the Packet Scheduler (PS) according to embodiments of the present invention, the Partial TS leaving the Packet Scheduler, derived from the partial transport stream(s) coming back from the CIMaX®+ module (i.e. having been processed by a CAM for example) and subsequently sent to the SoC, has exactly the same clock as the corresponding MPTS (or TS) originally received from the corresponding tuner (TUN). An objective of the present invention is that the Packet Scheduler (PS) re-uses the information inserted by the TMI so that the time distance between two transport packets carrying Programme Clock Reference (PCR) information is maintained, e.g. the number of transport packets between the two packets carrying PCR information remains the same for transport packets within the Partial TS being sent to the SoC as it was in the transport stream or Partial TS received from the tuner (TUN).

A PCR packet distance is defined as being the distance between two consecutive transport packets of interest (therefore having the same PID) which carry PCR information, this being expressed in terms of the number of packets. According to an embodiment of the present invention, a Timing Mark Inserter (TMI) is associated with each of the transport stream inputs coming from the tuners. The Timing Mark Inserter (TMI) is configured to insert the PCR packet distance into the resulting partial transport stream. According to the embodiment, there are two possible placeholders where the PCR packet distance may be inserted, as follows:

in the PCR information itself (i.e. the PCR information of one of the two packets which carry PCR information) by recycling some of the most signification bits of the standard PCR field; or

in place of the first transport packet dropped due to the process of PID filtering (described above for reducing the amount of bandwidth used by only keeping content associated with process IDs of interest). The PCR information in this case is added after the transport packet containing the PCR. The syntax of the dropped packet could be the one of a private section.

According to another embodiment, the Timing Mark Inserter works in a different way, using a Timing Mark Buffer. This is described further down.

According to one embodiment of the present invention, the Timing Marker Inserter described above inserts the PCR packet distance into the Partial TSs in the path between the tuner and the CIMaX®+ module for Partial Transport Streams which are to be sent towards the CAM. For processed Partial Transport Streams coming back from the CAM via the CIMaX®+ module on their way to the transport stream inputs of the content player (SoC), they first have to be processed by the side-car FPGA to make sure they are properly scheduled. Part of this processing involves the use of the Packet Scheduler in the side-car FPGA, which is one of the last blocks to treat the packets before they are sent to the content player. When the next packet to be sent by the Packet Scheduler is a packet containing a PCR, the Packet Scheduler according to the embodiment extracts the PCR packet distance (from either the recycled PCR or from the replaced transport packet as described above) and ensures that the PCR packet distance from the previous PCR transport packet is reached before sending the next PCR-comprising transport packet. A FIFO is provided ahead of the Packet Scheduler in order to allow the Packet Scheduler to wait for the PCR packet distance to be reached.

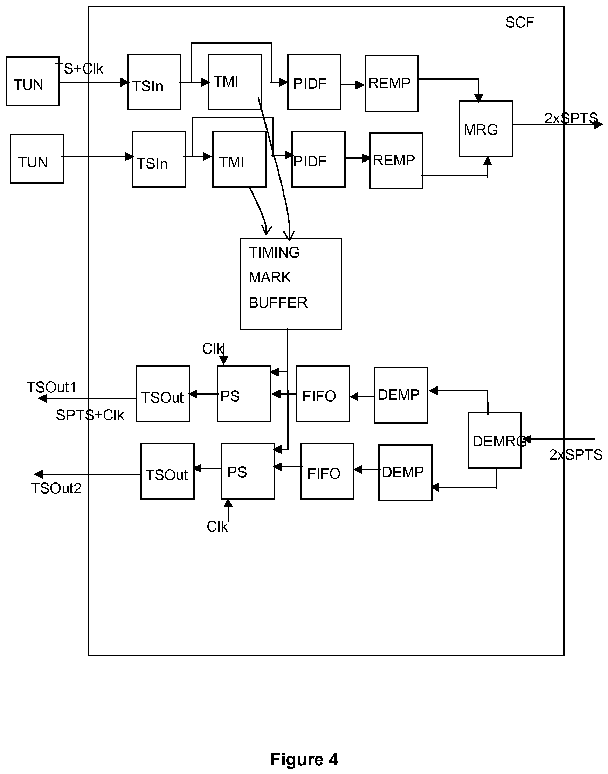

According to another embodiment, the Timing Mark Inserter (TMI) works in conjunction with a Timing Mark Buffer, as shown in Figure 4. In this embodiment, the Timing Mark Inserter monitors its respective incoming transport stream, before it is filtered by its respective PID filter, to check for packets of interest (correct PID) which comprise a PCR. When it encounters such a packet with a PCR it counts the number of packets till the next packet (with the PID of interest) with a PCR and places the thus observed PCR packet distance in a buffer (Timing Mark Buffer).

The sync remappers in the side-car FPGA module ensure that the value of the sync bytes from each of the transport streams (partial transport streams) get changed before the partial transport streams are merged. This allows for the partial streams to be identifiable within the merged stream from the side-car FPGA (Merger). Similarly, the sync remapper in the CIMax®+ module ensures that the sync bytes in the transport stream coming from the USB input do not coincide with any of the sync bytes in either of the partial transport streams. The Merger in the CIMaX®+ Module merges the transport stream from the side-car FPGA module with the remapped stream from the USB input before sending the merged stream comprising the three originally received transport streams to the CAM. Conversely, the DeMerger in the CIMaX®+ module separates the combined stream from the CAM into a stream intended to go back to the USB port (using the sync byte to filter) and a stream comprising two partial streams to go back to the side-car FPGA. The Demerger in the side-car FPGA then separates the combined stream into two partial streams depending on which receiver they correspond to (using the sync byte values). The sync demapper in the CIMaX®+ module returns the value of packets which are identified as having come from the USB input to their original value (usually 0x47) and the Sync Demappers in the side-car FPGA return the sync bytes in the demerged packets to their original values.

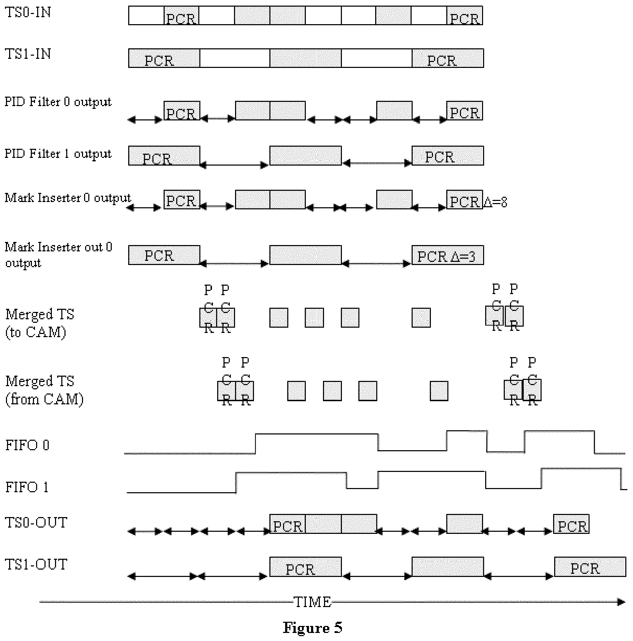

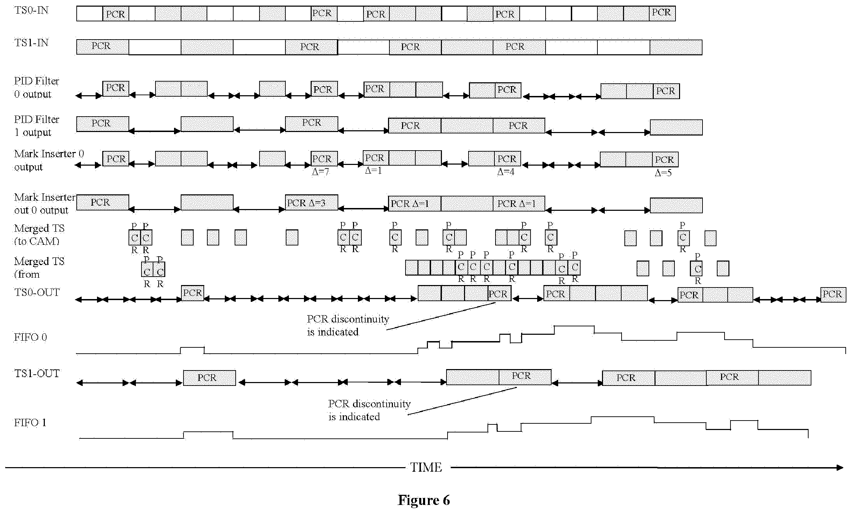

In order to allow the Packet Scheduler to wait for an amount of time corresponding to the PCR packet distance to be reached, the Side-Car FPGA according to an embodiment of the present invention further comprises a FIFO, which is made available at the input of the Packet Scheduler, as shown in Figure 2, illustrating components of a host device in which an embodiment of the present invention may be deployed and Figures 3 and 4, illustrating FPGAs in which other embodiments of the present invention may be deployed. See also corresponding timing diagrams of Figures 5 and 6.

### SIDE-CAR

The side-car FPGA, according to an embodiment, is configured to receive 2 serial TS inputs, each input possibly having a bit rate of up to 120 Mbits/s. The side-car FPGA comprises PID filtering logic allowing the filtering of up to 16 pre-determined PIDs for each of the 2 serial TS inputs. The list of the PIDs to be filtered is preferably configurable from the SoC. The side-car FPGA is further configured to manage some timing information, using the Timing Mark Inserter modules (TMI). Using the Timing Mark Inserter modules, the timing information can be managed such that in the resulting SPTS(s) a PCR accurate SPTS can eventually be regenerated for sending to the SoC serial inputs (TSIn1, TSIn2). The side-car FPGA is still further configured to modify the sync-byte value of each SPTS according to configuration controlled by the SoC. Any sync-byte value may possibly be selected by the SoC. For example, the SoC could be configured to thus remap the transport streams (SPTS) such that the sync bytes for two different SPTS have the values 0x48 and 0x49, for example. The sync remapper modules (REMP) shown in Figures 2 and 3 can be used for this.

The side-car FPGA comprises a multiplexer to merge the 2 remapped SPTS and produce a serial TS comprising the 2 x SPTS to be sent to the CIMaX®+ serial TS input. The output clock of the 2xSPTS is preferably configurable by the SoC.

The side-car FPGA comprises a serial TS input from which it can receive serial output of the CIMaX®+, said serial output comprising a serial TS comprising the 2 x SPTS processed by the CAM. The side-car FPGA comprises a demultiplexer to unmerge the 2 SPTS based on the sync-byte values programmed by the SoC (said programming affecting the remapper). The side-car FPGA comprises a sync demapper (DEMP) to restore the original sync-byte value of each individual SPTS, 0x47 for example. The side-car FPGA comprises two separate buffers (FIFO) (one for each partial transport stream) to bufferize the SPTS transport packets, each FIFO being large enough to hold enough packets to be able to compensate for worst case delay variation. The side-car FPGA comprises a packet scheduler (PS) to schedule the transmission of the FIFO-stored transport packets on each serial output to the SoC. The output clock on each TSOut is a copy of the TSIn clock from the corresponding DVB Tuner. During the scheduling, the side-car FPGA uses the inserted timing information (by the timing mark inserter (TMI)) so that the time distance between 2 transport packets containing PCR information in the original TS received from the DVB Tuner is respected on the TS output to the SoC. By doing this, the side-car FPGA enforces that no PCR jittering is introduced form the DVB Tuner output to the SoC TS input.

### TIMING MARK INSERTER

The TMI is configurable from the SoC which indicates the PID on which PCR be scanned (i.e. indicates the PID of interest). In other words each TMI (one for each of the two tuner inputs) has knowledge of which PIDs are to be filtered by its associated PID Filter stage down the line.

According to one embodiment, the Timing Mark Inserter inserts marks into the packets after they have been filtered i.e. after the PID filtering stage (PIDF). The inserted marks remain in their respective (partial) transport streams and are therefore merged before being sent to the CIMax®+ module. On return form the CIMaX®+ module, after demerging (demultiplexing) the transport stream back into the two corresponding (partial) transport streams, each partial transport stream comprising its relative timing marks, the timing marks can be used by the respective packet schedulers to properly synchronise the timing of the packets going back to the SoC.

According to another embodiment, the Timing Mark Inserters (TMI) work on the packets from the TS inputs before the PID filtering stages. In this embodiment the TMIs use a Timing Mark Buffer (Figure 4).

In both of the embodiments described above, each TMI comprises a packet counter whose value is:

incremented every time a transport packet is observed in its corresponding transport stream; and reset every time a packet is observed which has a PID which matches the PID which is to be filtered by its associated PID Filter (PID of interest) and which contains a PCR value.

In the first embodiment mentioned above, the packet counter value is inserted into the partial transport stream just before the packet counter value is reset. This is effectively the PCR packet distance. The PCR packet distance may also be logged in the TMI. In the second embodiment mentioned above, when a transport packet matching the PID of interest and comprising a PCR value is received the TMI logs the packet counter value in a Timing Mark Ring Buffer before the packet counter is reset. This effectively stores the PCR packet distance in the Timing Mark Buffer. According to an embodiment, a single Timing Mark Ring Buffer may be shared by the two Timing Mark Inserter modules. The packet counter is thereby effectively used to measure the distance (delta) between successive transport packets containing PCR values, this delta being expressed in terms of a number of transport packets. Hence, the Timing Mark Inserter module builds a list of distances between PCR packets that are currently in transit between the side-car FPGA TS input and TS output. According to an embodiment therefore, the Timing Mark Ring Buffer holds a list of distances (deltas, in terms of numbers of transport packets) relative to both transport stream inputs in the order in which the respective PCR-containing transport packets of interest (PIDs of interest) are observed (received by the side-car FPGA) These distances are known as PCR packet distances.

### PACKET SCHEDULER

When a transport packet is received from the CICAM, it is stored in a FIFO. There is one FIFO for each of the 2 partial TS. The Packet Scheduler is responsible for the scheduling of the (partial) TS packets on the TS output to the SoC at the right time.

The major assumption about the packet scheduler is that the TS output clock is slaved to the TS input clock which allows for releasing a PCR compliant without having to recalculate the PCR and just ensure that the time distance between 2 packets carrying PCR information is maintained. Hence, the purpose of the packet scheduler is to make sure that the time distance (expressed in number of TS packets) between 2 packets containing PCR in the transport streams being output to the SoC is maintained with respect to the time distance when the packets were received from the DVB tuner inputs.

### FIFO SIZING

2 cases shall be considered:

    constant delay CICAM; and
    variable delay CICAM.

According to the CI+ 1.4 spec, the CICAM may introduce some variation in the transport packet delay when performing broadcast and IP delivery (Host player Mode or CICAM player mode) at the same time. The main reason for this is that in Host player mode, the CICAM will very likely implement some DMA (direct memory access) between its buffering memory and the TS output and, while outputting Host player mode related transport packets, the CICAM does not release the broadcast packets received. Those later are released after completion of the DMA transfer.

The CI+ 1.4 does not specify the maximum delay applied by the CICAM.

### CONSTANT DELAY CICAM

Figure 5 shows a timing diagram relating to a part of a system in which an embodiment of the present invention may be deployed. In this example:

    TS0 is at 48 Mbits/s;
    TS1 is at 24 Mbits/s; and
    TS to/from CAM is at 96 Mbits/s.

CICAM works in constant delay. Both FIFOs therefore contain at maximum one transport packet.

### VARIABLE DELAY CICAM

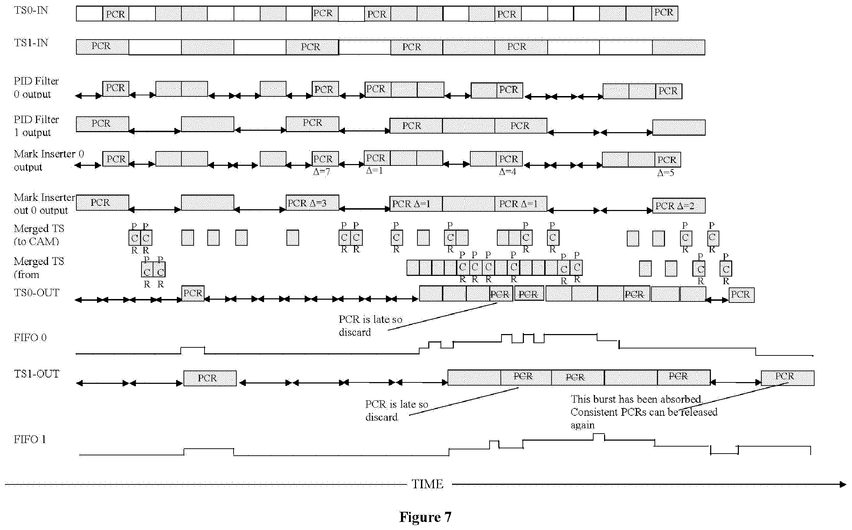

Figure 6 shows another timing diagram relating to a system according to an embodiment of the present invention operating with a variable delay CAM. Figure 7 shows yet another timing diagram relating to a system according to another embodiment of the present invention, also operating with a variable delay CAM. In this example:

    TS0 is at 48 Mbits/s;
    TS1 is at 24 Mbits/s; and
    TS to/from CAM is at 96 Mbits/s.

The CICAM does not respect constant delay (for example, because the Host player Mode is active on the 3rd TS not shown here). Due to Host Player Mode, the CICAM sometimes retains broadcast transport packets and then releases these in a burst. Both FIFOs are filled as a consequence of the burst. In the worst case, the FIFO contains all the packets retained by the CICAM while the DMA was occupied with tasks related to the host player mode.

Due to the CICAM having had to retain some packets, the PCR consistency cannot be maintained (without modifying the PCR value) for the first PCR released after the burst because the previous PCR is already too far away. In other words, the next packet with a PCR will appear to be "late". In order to deal with this, the "late" PCR is replaced by stuffing and the Packet Scheduler aggregates the time distance for the next PCR. Any packet can be used as a stuffing packet as long as it does not have a PCR. The stuffing packet can be a dummy packet. This procedure is repeated until the next valid (i.e. not late) PCR is received, thereby indicating that the burst has been absorbed.

### FIFO SIZE ESTIMATION

Each FIFO shall be large enough to contain all the transport packets received during a "DMA Transfer" of the CICAM. Considering that:

a DMA transfer would last 200 ms; and
the maximum Partial TS input bitrate is 20 Mbits/s.

The FIFO size should be preferably:

$$0,2 \times 20 = 4 \text{ Mbits} = 0,5 \text{ Mbytes}.$$

As there are 2 FIFOs, then the minimum internal memory size of the side-car FPGA should be preferably 1 Mbyte.

### Claims

1. A system for processing a plurality of input transport streams, each input transport stream being clocked by its own input transport stream clock, and for providing a plurality of output single programme transport streams, each output single programme transport stream corresponding respectively to one from the plurality of input transport streams, the system comprising:

a host device (HST) for merging a plurality of packets from the plurality of input transport streams thereby forming a multi-programme transport stream; and
a conditional access module (CAM) for performing said processing of the multi-programme transport stream, the conditional access module (CAM) being connectable to the host device (HST) via a standard interface (CI) comprising an input port for the multi-programme transport stream and an output port for the thus processed multi-programme transport stream;

the host device (HST) comprising:

an interface controller module (CICTL) comprising a first merger for merging a first one from said plurality of input transport streams with a second transport stream to provide the multi-programme stream and further comprising a first demerger for demerging the processed multi-programme transport stream thereby providing a demerged multi-programme transport stream corresponding to the second transport stream and a first from said plurality of output single programme transport streams corresponding to the first one from said plurality of input transport streams;
wherein:

the host device (HST) further comprises a custom module (SCF) comprising:

a second merger for merging a second one and a third one from said plurality of input transport streams, thereby providing the second transport stream for the interface controller module; and
a second demerger for demerging the demerged multi-programme transport stream thereby providing a second and a third single programme transport stream;

the custom module (SCF) further comprising:

a first and a second timing mark inserter configured respectively to monitor the second and the third input transport streams, each timing mark inserter further configured to record at least one PCR packet distance value representative of a number of packets between consecutive transport stream packets comprising a PCR timing value within its respective input transport stream;
a first and a second packet scheduler configured respectively to monitor the second and the third single programme transport streams and to delay outputting of a transport packet having a PCR timing value within its relative single programme transport stream as a function of its respective recorded packet PCR packet distance value, said outputting being to the second and third output single programme transport streams respectively, the second and third output single programme transport streams each being clocked by an output transport stream clock slaved to its respective input transport stream clock; and
a FIFO buffer made available at the inputs of each of the packet schedulers in order to allow the packet schedulers to wait for the PCR packet distance to be reached.

2. The system according to claim 1, wherein the interface controller module further comprises a PID filter to select one from a plurality of PIDs, thereby allowing for the selection of one single programme transport stream from the first input transport stream to be merged with the second transport stream should the first input transport stream be a multi-programme transport stream comprising a plurality of single programme transport streams, each single programme transport stream having a plurality of transport packets each having a same packet identifier value PID different from a PID from another single programme transport stream.

3. The system according to either of claims 1 or 2, wherein the custom module further comprises at least one PID filter to select one from a plurality of PIDs, thereby allowing for the selection of one single programme transport stream from the second input transport stream to be merged with one single programme transport stream from the third input transport stream should either or both of the second or third input transport streams be a multi-programme transport stream comprising a plurality of single programme transport streams, each single programme transport stream having a plurality of transport packets each having a same packet identifier value PID different from a PID from another single programme transport stream.

4. The system according to claim 3, wherein the PID filter is placed before the first timing mark inserter and a further PID filter is placed before the second timing mark inserter.

5. The system according to claim 3, wherein the first timing mark inserter is placed before the PID filter and the second timing mark inserter is placed before a further PID filter.

6. The system according to any of the preceding claims, further comprising at least one sync remapper inserted in a path preceding a merger and at least one sync demapper inserted in a path following a demerger, the sync remapper configured to modify a value of a sync-byte within at least one packet in its corresponding transport stream in order to allow the packet to be identified as belonging to one or other of the transport streams following a merge, the sync demapper configured to return the value of the sync-byte to its original value following a demerge.

7. The system according to any of the preceding claims, wherein the timing mark inserters are configured to record the PCR packet distance value by inserting the PCR packet distance value into its respective transport stream and the packet schedulers are configured to read the recorded PCR packet distance values and delay the outputting of transport packets in their respective transport streams having PCR values as a function of the read PCR packet distance values.

8. The system according to any of claims 1 to 6, wherein the custom module further comprises a timing mark buffer and the timing mark inserters are configured to record the PCR packet distance value by inserting the value into a timing mark buffer and the packet schedulers are configured to successively read the recorded PCR packet distance values from the timing mark buffer and to delay the outputting of packets in their relative transport streams having PCR values as a function of the read PCR packet distance values.

9. The system according to any of the preceding claims, further comprising a media player/recorder to play and/or record content received via any from the plurality of output single programme transport streams.

10. The system according to claim 9, wherein the media player/recorder is configured to programme any combination of up to three PID filters to select up to three from sixteen predetermined PIDs.

11. The system according to any of the preceding claims wherein the standard interface is one which is configured to operate according to a Common Interface Plus 1.4.

12. A method for processing a plurality of input transport streams, each input transport stream being clocked by its own input transport stream clock, and for providing a plurality of output single programme transport streams, each output single programme transport stream corresponding respectively to one from the plurality of input transport streams using a system comprising a host device and a conditional access module, the conditional access module being connectable to the host device via a standard interface comprising an input port for the multi-programme transport stream and an output port for the thus processed multi-programme transport stream, comprising:

> merging a plurality of packets from the plurality of input transport streams in the host device, thereby forming a multi-programme transport stream; and
> processing the multi-programme transport stream in the conditional access module;

said merging comprising:

> in an interface controller module within the host device:

merging a first one from said plurality of input transport streams with a second transport stream to provide the multi-programme stream; and
demerging the processed multi-programme transport stream thereby providing a demerged multi-programme transport stream corresponding to the second transport stream and a first from said plurality of output single programme transport streams corresponding to the first one from said plurality of input transport streams; wherein:

the method further comprises, in a custom module within the host device:

merging, in a second merger, a second one and a third one from said plurality of input transport streams, thereby providing the second transport stream for the interface controller module; and demerging, in a demerger, the demerged multi-programme transport stream thereby providing a second and a third single programme transport stream;

the method further comprising, in the custom module:

monitoring, using a first and a second timing mark inserter, the second and the third input transport streams, and recording at least one PCR packet distance value representative of a number of packets between consecutive transport stream packets comprising a PCR timing value within its respective input transport stream;
monitoring, using a first and a second packet scheduler, the second and the third single programme transport streams, and delaying outputting of a transport packet having a PCR timing value within its relative single programme transport stream as a function of its respective recorded packet PCR packet distance value, said outputting being to the second and third output single programme transport streams respectively, the second and third output single programme transport streams each being clocked by an output transport stream clock slaved to its respective input transport stream clock; and
providing a FIFO buffer at the inputs of each of the packet schedulers in order to allow the packet schedulers to wait for the PCR packet distance to be reached.

## Patentansprüche

1. System zur Verarbeitung einer Vielzahl von Eingangstransportströmen, wobei jeder Eingangstransportstrom durch seinen eigenen Eingangstransportstromtakt getaktet wird, und zur Bereitstellung einer Vielzahl von Ausgangseinzelprogramm-Transportströmen, wobei jeder Ausgangseinzelprogramm-Transportstrom einem aus der Vielzahl von Eingangstransportströmen entspricht, wobei das System folgendes umfasst:

ein Host-Gerät (HST) zum Zusammenführen einer Vielzahl von Paketen aus der Vielzahl von Eingangstransportströmen zwecks Bildung eines Multi-Programm-Transportstroms; und
ein Zugangsberechtigungsmodul (CAM) zum Durchführen der Verarbeitung des Multi-Programms-Transportstroms, wobei das Zugangsberechtigungsmodul (CAM) mit dem Host-Gerät (HST) mittels eines Normanschlusses (CI) mit einem Eingangsport für den Multi-Programm-Transportstrom und einem Ausgangsport für den so verarbeiteten Multi-Programm-Transportstrom verbindbar ist;

wobei das Host-Gerät (HST) folgendes umfasst:

ein Interface-Controller-Modul (CICTL) mit einer ersten Zusammenführung, um einen ersten aus der Vielzahl von Eingangstransportströmen mit einem zweiten Transportstrom zusammenzuführen, um den Multi-Programm-Strom zu liefern, sowie mit einer ersten Auseinanderführung, um den verarbeiteten Multi-Programm-Transportstrom auseinanderzuführen, zwecks Bereitstellung eines auseinandergeführten Multi-Programm-Transportstroms, entsprechend dem zweiten Transportstrom, und einen ersten aus der Vielzahl von Ausgangseinzelprogramm-Transportströmen, entsprechend dem ersten aus der Vielzahl von Eingangstransportströmen;

wobei:

das Host-Gerät (HST) des Weiteren ein benutzerdefiniertes Modul (SCF) umfasst, das folgendes umfasst:

eine zweite Zusammenführung, um einen zweiten und einen dritten aus der Vielzahl von Eingangstransportströmen zusammenzuführen, zwecks Bereitstellung des zweiten Transportstroms für das Interface-Controller-Modul; und

eine zweite Auseinanderführung, um den auseinandergeführten Multi-Programm-Transportstrom auseinanderzuführen, zwecks Bereitstellung eines zweiten und eines dritten Einzelprogramm-Transportstroms;

wobei das benutzerdefinierte Modul (SCF) des Weiteren folgendes umfasst:

einen ersten und einen zweiten Taktmarken-Inserter, der konfiguriert ist, um den zweiten bzw. den dritten Eingangstransportstrom zu überwachen, wobei jeder Taktmarken-Inserter des weiteren konfiguriert ist, um mindestens einen PCR-Paketabstandswert aufzuzeichnen, der repräsentativ für eine Zahl von Paketen zwischen aufeinanderfolgenden Transportstrompaketen ist, mit einem PCR-Taktwert innerhalb seines betreffenden Eingangstransportstroms; einen ersten und einen zweiten Packet Scheduler, der konfiguriert ist, um den zweiten bzw. dritten Einzelprogramm-Transportstrom zu überwachen, und die Ausgabe eines Transportpakets zu verzögern, mit einem PCR-Taktwert innerhalb seines relativen Einzelprogramm-Transportstroms, als Funktion seines gespeicherten Paket-PCR-Paketabstandswerts, wobei die Ausgabe in den zweiten bzw. dritten Ausgangseinzelprogramm-Transportstrom erfolgt, wobei der zweite und der dritte Ausgangseinzelprogramm-Transportstrom jeweils von einem Ausgabetransportstromtakt getaktet wird, der mit seinem betreffenden Eingangstransportstromtakt synchronisiert ist; und ein FIFO-Puffer steht bei den Eingaben jedes der Packet Scheduler zur Verfügung, damit die Packet Scheduler warten können, bis der PCR-Paket-Abstand erreicht ist.

2. System nach Anspruch 1, wobei das Interface-Controller-Modul des Weiteren einen PID-Filter umfasst, um einen aus einer Vielzahl von PIDs auszuwählen, so dass die Auswahl eines Einzelprogramm-Transportstroms aus dem ersten Eingangstransportstrom möglich wird, der mit dem zweiten Transportstrom zusammengeführt werden soll, sollte der erste Eingangstransportstrom ein Multi-Programm-Transportstrom sein, mit einer Vielzahl von Einzelprogramm-Transportströmen, wobei jeder Einzelprogramm-Transportstrom eine Vielzahl von Transportpaketen umfasst, von denen jedes denselben Paketidentifikatorwert PID umfasst, der anders als ein PID aus einem anderen Einzelprogramm-Transportstrom ist.

3. System nach einem beliebigen der Ansprüche 1 oder 2, wobei das benutzerdefinierte Modul des Weiteren mindestens einen PID-Filter umfasst, um einen aus einer Vielzahl von PIDs auszuwählen, so dass die Auswahl eines einzigen Programmtransportstroms aus dem zweiten Eingangstransportstrom möglich wird, der mit einem Einzelprogramm-Transportstrom aus dem dritten Eingangstransportstrom zusammengeführt werden soll, sollte der zweite oder der dritte Eingangstransportstrom oder beide ein Multi-Programm-Transportstrom sein, mit einer Vielzahl von Einzelprogramm-Transportströmen, wobei jeder Einzelprogramm-Transportstrom eine Vielzahl von Transportpaketen umfasst, die alle denselben Paketidentifikatorwert PID haben, der anders als ein PID aus einem anderen Einzelprogramm-Transportstrom ist.

4. System nach Anspruch 3, wobei der PID-Filter vor dem ersten Taktmarken-Inserter gelegen ist und ein weiterer PID-Filter vor dem zweiten Taktmarken-Inserter gelegen ist.

5. System nach Anspruch 3, wobei der erste Taktmarken-Inserter vor dem PID-Filter gelegen ist und der zweite Taktmarken-Inserter vor einem weiteren PID-Filter gelegen ist.

6. System nach einem beliebigen der vorherigen Patentansprüche, das des Weiteren mindestens einen Sync-Remapper umfasst, der in einen Pfad vor einer Zusammenführung eingefügt wird, und mindestens einen Sync-Demapper, der in einen Pfad eingefügt wird, der auf eine Auseinanderführung folgt, wobei der Sync-Remapper konfiguriert ist, um einen Wert eines Sync-Bytes in mindestens einem Paket in seinem entsprechenden Transportstrom zu modifizieren, damit das Paket als einem oder dem anderen der Transportströme nach einer Zusammenführung angehörend identifiziert werden kann, wobei der Sync-Demapper konfiguriert ist, um den Wert des Sync-Bytes nach einer Auseinanderführung auf seinen ursprünglichen Wert zurückzuführen.

7. System nach einem beliebigen der vorherigen Patentansprüche, wobei die Taktmarkeninserter konfiguriert sind, um den PCR-Paketabstandswert aufzuzeichnen, durch Einfügung des PCR-Paketabstandswerts in den betreffenden Transportstrom, und die Packet Scheduler konfiguriert sind, um die aufgezeichneten PCR-Paketabstandswerte abzulesen und die Ausgabe von Transportpaketen in ihren betreffenden Transportströmen zu verzögern, mit PCR-Werten als Funktion der abgelesenen PCR-Paketabstandswerte.

8. System nach einem beliebigen der Ansprüche 1 bis 6, wobei das benutzerdefinierte Modul des Weiteren einen Taktmarkenpuffer umfasst und die Taktmarkeninserter konfiguriert sind, um den PCR-Paketabstandswert durch Einfügung des Wertes in einen Taktmarkenpuffer aufzuzeichnen und die Packet Scheduler konfiguriert sind, daraufhin die aufgezeichneten PCR-Paketabstandswerte von dem Taktmarkenpuffer abzulesen und die Ausgabe von Paketen in ihren relativen Transportströmen mit PCR-Werten als Funktion der abgelesenen PCR-Paketabstandswerte zu verzögern.

9. System nach einem beliebigen der vorherigen Patentansprüche, das des Weiteren einen Mediaplayer/-aufzeichnungsgerät umfasst, um Inhalt abzuspielen und/oder aufzuzeichnen, der von jedem aus der Vielzahl von Ausgangseinzelprogramm-Transportströmen empfangen wurde.

10. System nach Anspruch 9, wobei der Mediaplayer/-aufzeichnungsgerät konfiguriert ist, um jede Kombination von bis zu drei PID-Filtern zu programmieren, um bis zu drei von sechzehn vorherbestimmten PIDs auszuwählen.

11. System nach einem beliebigen der vorherigen Patentansprüche, wobei die Standardschnittstelle konfiguriert ist, um gemäß einer Common Interface Plus 1,4 zu operieren.

12. Verfahren zur Verarbeitung einer Vielzahl von Eingangstransportströmen, wobei jeder Eingangstransportstrom durch seinen eigenen Eingangstransportstromtakt getaktet wird, und zur Bereitstellung einer Vielzahl von Ausgangseinzelprogramm-Transportströmen, wobei jeder Ausgangseinzelprogramm-Transportstrom je einem aus der Vielzahl von Eingangstransportströmen entspricht, unter Verwendung eines Systems, das ein Host-Gerät und ein Zugangsberechtigungsmodul umfasst, wobei das Zugangsberechtigungsmodul mit dem Host-Gerät mittels einer Standardschnittstelle mit einem Eingangsport für den Multi-Programm-Transportstrom und einem Ausgangsport für den so verarbeiteten Multi-Programm-Transportstrom verbindbar ist, mit:

    Zusammenführung einer Vielzahl von Paketen aus der Vielzahl von Eingangstransportströmen in dem Host-Gerät, und dadurch Bildung eines Multi-Programm-Transportstroms; und
    Verarbeitung des Multi-Programm-Transportstroms in dem Zugangsberechtigungsmodul;

wobei die Zusammenführung folgendes umfasst:

in einem Interface-Controller-Modul im Host-Gerät:

    Zusammenführung eines ersten aus der Vielzahl von Eingangstransportströmen mit einem zweiten Transportstrom, um den Multi-Programm-Strom zu liefern; und Auseinanderführen des verarbeiteten Multi-Programms-Transportstroms zwecks Bereitstellung eines auseinandergeführten Multi-Programms-Transportstroms, entsprechend dem zweiten Transportstrom, und eines ersten aus der Vielzahl von Ausgangseinzelprogramm-Transportströmen, entsprechend dem ersten aus der Vielzahl von Eingangstransportströmen;

wobei:

    das Verfahren des Weiteren umfasst, in einem benutzerdefinierten Modul im Host-Gerät:

        Zusammenführen, in einer zweiten Zusammenführung, eines zweiten und eines dritten aus der Vielzahl von Eingangstransportströmen, zwecks Bereitstellung des zweiten Transportstroms für das Interface-Controller-Modul; und
        Auseinanderführen, in einer Auseinanderführung, des auseinandergeführten Multi-Programm-Transportstroms zwecks Bereitstellung eines zweiten und eines dritten Einzelprogramm-Transportstroms;

    wobei das Verfahren des Weiteren in dem benutzerdefinierten Modul folgendes umfasst:

        Überwachung, unter Verwendung eines ersten und eines zweiten Taktmarken-Inserters, des zweiten und des dritten Eingangstransportstroms, und Aufzeichnung mindestens eines PCR-Paketabstandswerts, der repräsentativ für eine Zahl der Pakete zwischen aufeinanderfolgenden Transportstrompaketen ist, mit einem PCR-Taktwert innerhalb seines betreffenden Eingangstransportstroms;
        Überwachung, unter Verwendung eines ersten und eines zweiten Packet Schedulers, des zweiten und des dritten Einzelprogramm-Transportstroms, und Verzögerung der Ausgabe eines Transportpakets mit einem PCR-Taktwert innerhalb seines relativen Einzelprogramm-Transportstroms als Funktion seines betreffenden gespeicherten Paket-PCR-Paketabstandswerts, wobei die Ausgabe in den zweiten bzw. dritten Ausgangseinzelprogramm-Transportstom erfolgt, wobei der zweite und der dritte Ausgangseinzelprogramm-Transportstrom jeweils von einem Ausgabetransportstromtakt getaktet ist, der mit seinem betreffenden Eingangstransportstromtakt synchronisiert ist; und

Bereitstellung eines FIFO-Puffers an den Eingaben jedes der Packet Scheduler, damit die Packet Scheduler warten können, bis der PCR-Paket-Abstand erreicht wird.

## Revendications

1. Système pour traiter une pluralité de flux de transport d'entrée, chaque flux de transport d'entrée étant chronométré par sa propre horloge de flux de transport d'entrée, et pour fournir une pluralité de flux de transport de programme unique de sortie, chaque flux de transport de programme unique de sortie correspondant respectivement à l'un de la pluralité de flux de transport d'entrée, le système comprenant:

un dispositif hôte (HST) pour fusionner une pluralité de paquets de la pluralité de flux de transport d'entrée formant ainsi un flux de transport multi-programme; et

un module d'accès conditionnel (CAM) pour exécuter ledit traitement du flux de transport multi-programme, le module d'accès conditionnel (CAM) étant connectable au dispositif hôte (HST) par une interface standard (CI) comprenant un port d'entrée pour le flux de transport multi-programme et un port de sortie pour le flux de transport multi-programme ainsi traité;

le dispositif hôte (HST) comprenant:

un module de contrôleur d'interface (CICTL) comprenant un première fusionneur pour fusionner un premier de ladite pluralité de flux de transport d'entrée avec un deuxième flux de transport pour fournir le flux multi-programme et comprenant en outre un premier séparateur pour défusionner le flux de transport multi-programme traité fournissant ainsi un flux de transport multi-programme défusionné correspondant au deuxième flux de transport et un premier de ladite pluralité de flux de transport de programme unique de sortie correspondant au premier de ladite pluralité de flux de transport d'entrée;

où:

le dispositif hôte (HST) comprend en outre un module personnalisé (SCF) comprenant:

un deuxième fusionneur pour fusionner un deuxième et un troisième de ladite pluralité de flux de transport d'entrée, fournissant ainsi le deuxième flux de transport pour le module de contrôleur d'interface; et

un deuxième séparateur pour défusionner le flux de transport multi-programme défusionné fournissant ainsi un deuxième et un troisième flux de transport de programme unique;

le module personnalisé (SCF) comprenant en outre:

un premier et un deuxième inserteur de marque de synchronisation configurés respectivement pour surveiller le deuxième et le troisième flux de transport d'entrée, chaque inserteur de marque de synchronisation étant configuré en outre pour enregistrer au moins une valeur de distance de paquet PCR représentative d'un nombre de paquets entre des paquets de flux de transport consécutifs comprenant une valeur de synchronisation PCR dans son flux de transport d'entrée respectif;

un premier et un deuxième planificateur de paquets configurés respectivement pour surveiller le deuxième et le troisième flux de transport de programme unique et pour retarder la sortie d'un paquet de transport ayant une valeur de synchronisation PCR dans son flux de transport de programme unique relatif comme une fonction de sa valeur de distance de paquet PCR de paquet enregistrée respective, ladite sortie étant destinée aux deuxième et troisième flux de transport de programme unique de sortie respectivement, le deuxième et troisième flux de transport de programme unique de sortie étant chacun chronométrés par une horloge de flux de transport de sortie asservie à son horloge de flux de transport d'entrée respective; et

un tampon FIFO mis à disposition aux entrées de chacun des planificateurs de paquets afin de permettre aux planificateurs de paquets d'attendre que la distance de paquet PCR soit atteinte.

2. Système selon la revendication 1, où le module de contrôleur d'interface comprend en outre un filtre PID pour sélectionner l'une d'une pluralité de PID, permettant ainsi que la sélection d'un flux de transport de programme unique du premier flux de transport d'entrée soit fusionnée avec le deuxième flux de transport si le premier flux de transport d'entrée est un flux de transport multi-programme comprenant une pluralité de flux de transport de programme unique, chaque flux de transport de programme unique ayant une pluralité de paquets de transport ayant chacun une même valeur d'identificateur de paquet PID différente d'une PID d'un autre flux de transport de programme unique.

3. Système selon l'une quelconque des revendications 1 ou 2, où le module personnalisé comprend en outre au moins un filtre PID pour sélectionner l'une d'une pluralité de PID, permettant ainsi que la sélection d'un flux de transport de programme unique du deuxième flux de transport d'entrée soit fusionnée avec un flux de transport de programme unique du troisième flux de transport d'entrée si l'un ou les deux du deuxième ou troisième flux de transport d'entrée sont un flux de transport multi-programme comprenant une pluralité de flux de transport de programme unique, chaque flux de transport de programme unique ayant une pluralité de paquets de transport ayant chacun une même valeur d'identificateur de paquet PID différente d'une PID d'un autre flux de transport de programme unique.

4. Système selon la revendication 3, où le filtre PID est placé devant le premier inserteur de marque de synchronisation et un autre filtre PID est placé devant le deuxième inserteur de marque de synchronisation.

5. Système selon la revendication 3, où le premier inserteur de marque de synchronisation est placé devant le filtre PID et le deuxième inserteur de marque de synchronisation est placé devant un autre filtre PID.

6. Système selon l'une quelconque des revendications précédentes, comprenant en outre au moins un remappeur de synchronisation inséré dans un chemin précédant un fusionneur et au moins un démappeur de synchronisation inséré dans un chemin après un séparateur, le remappeur de synchronisation étant configuré pour modifier une valeur d'un octet de synchronisation dans au moins un paquet dans son flux de transport correspondant afin de permettre que le paquet soit identifié comme appartenant à l'un ou l'autre des flux de transport suite à une fusion, le démappeur de synchronisation étant configuré pour retourner la valeur de l'octet de synchronisation à sa valeur originale suite à une scission.

7. Système selon l'une quelconque des revendications précédentes, où les inserteurs de marque de synchronisation sont configurés pour enregistrer la valeur de distance de paquet PCR en insérant la valeur de distance de paquet PCR dans son flux de transport respectif et les planificateurs de paquets sont configurés pour lire les valeurs de distance de paquet PCR enregistrées et retarder la sortie de paquets de transport dans leurs flux de transport respectifs ayant les valeurs PCR comme une fonction des valeurs de distance de paquet PCR lues.

8. Système selon l'une quelconque des revendications 1 à 6, où le module personnalisé comprend en outre un tampon de marque de synchronisation et les inserteurs de marque de synchronisation sont configurés pour enregistrer la valeur de distance de paquet PCR en insérant la valeur dans un tampon de marque de synchronisation et les planificateurs de paquets sont configurés pour lire successivement les valeurs de distance de paquet PCR enregistrées du tampon de marque de synchronisation et pour retarder la sortie de paquets dans leurs flux de transport relatifs ayant des valeurs PCR comme une fonction des valeurs de distance de paquet PCR lues.

9. Système selon l'une quelconque des revendications précédentes, comprenant en outre un lecteur/enregistreur de médias pour reproduire et/ou enregistrer du contenu reçu via l'un quelconque de la pluralité de flux de transport de programme unique de sortie.

10. Système selon la revendication 9, où le lecteur/enregistreur de médias est configuré pour programmer toute combinaison de jusqu'à trois filtres PID pour sélectionner jusqu'à trois de seize PID prédéterminées.

11. Système selon l'une quelconque des revendications précédentes où l'interface standard est une qui est configurée pour fonctionner selon une interface Common Interface Plus 1.4.

12. Méthode pour traiter une pluralité de flux de transport d'entrée, chaque flux de transport d'entrée étant chronométré par sa propre horloge de flux de transport d'entrée, et pour fournir une pluralité de flux de transport de programme unique de sortie, chaque flux de transport de programme unique de sortie correspondant respectivement à l'un de la pluralité de flux de transport d'entrée utilisant un système comprenant un dispositif hôte et un module d'accès conditionnel, le module d'accès conditionnel étant connectable au dispositif hôte par une interface standard comprenant un port d'entrée pour le flux de transport multi-programme et un port de sortie pour le flux de transport multi-programme ainsi traité, comprenant:

    fusionner une pluralité de paquets de la pluralité de flux de transport d'entrée dans le dispositif hôte, formant ainsi un flux de transport multi-programme; et
    traiter le flux de transport multi-programme dans le module d'accès conditionnel;

    ladite fusion comprenant:

    dans un module de contrôleur d'interface dans le dispositif hôte:

fusionner un premier de ladite pluralité de flux de transport d'entrée avec un deuxième flux de transport pour fournir le flux multi-programme; et

défusionner le flux de transport multi-programme traité fournissant ainsi un flux de transport multi-programme défusionné correspondant au deuxième flux de transport et un premier de ladite pluralité de flux de transport de programme unique de sortie correspondant au premier de ladite pluralité de flux de transport d'entrée;

où:

la méthode comprend en outre, dans un module personnalisé dans le dispositif hôte:

fusionner, dans un deuxième fusionneur, un deuxième et un troisième de ladite pluralité de flux de transport d'entrée, fournissant ainsi le deuxième flux de transport pour le module de contrôleur d'interface; et

défusionner, dans un séparateur, le flux de transport multi-programme défusionné fournissant ainsi un deuxième et un troisième flux de transport de programme unique;

la méthode comprenant en outre, dans le module personnalisé:

surveiller, utilisant un premier et un deuxième inserteur de marque de synchronisation, le deuxième et le troisième flux de transport d'entrée, et enregistrer au moins une valeur de distance de paquet PCR représentative d'un nombre de paquets entre des paquets de flux de transport consécutifs comprenant une valeur de synchronisation PCR dans son flux de transport d'entrée respectif;

surveiller, utilisant un premier et un deuxième planificateur de paquets, le deuxième et le troisième flux de transport de programme unique, et retarder la sortie d'un paquet de transport ayant une valeur de synchronisation PCR dans son flux de transport de programme unique relatif comme une fonction de sa valeur de distance de paquet PCR de paquet enregistrée respective, ladite sortie étant destinée au deuxième et troisième flux de transport de programme unique de sortie respectivement, le deuxième et troisième flux de transport de programme unique de sortie étant chacun chronométrés par une horloge de flux de transport de sortie asservie à son horloge de flux de transport d'entrée respective; et

fournir un tampon FIFO aux entrées de chacun des planificateurs de paquets afin de permettre aux planificateurs de paquets d'attendre que la distance de paquet PCR soit atteinte.

EP 2 852 169 B1

Figure 1

Figure 2

17

**Figure 3**

**Figure 4**

**Figure 5**

TS0-IN

TS1-IN

PID Filter 0 output

PID Filter 1 output

Mark Inserter 0 output

Mark Inserter out 0 output

Merged TS (to CAM)

Merged TS (from

TS0-OUT

FIFO 0

TS1-OUT

FIFO 1

PCR discontinuity is indicated

PCR discontinuity is indicated

TIME

**Figure 6**

Figure 7

## REFERENCES CITED IN THE DESCRIPTION

**Patent documents cited in the description**

- EP 1340368 B1
- US 20040252833 A1
- US 2007074256 A1